# EUROPEAN PATENT APPLICATION

(11) **EP 4 614 629 A1**
(43) Date of publication of application: **10.09.2025**
(21) Application number: 25160652.1
(22) Date of filing: 27.02.2025
(51) Int. Cl.: H01M 6/42, H01M 6/46, H01M 50/209, H01M 50/211, H01M 50/291, H01M 50/593, H01M 50/595, H01M 50/103, H01M 50/105

(54) **BATTERY PACK**

(30) Priority: 04.03.2024 KR 20240030907
(71) Applicant: SAMSUNG SDI CO., LTD., Yongin-si, Gyeonggi-do 17084 (KR)
(72) Inventor: WANG, HANJUN, 17084 Yongin-si, Gyeonggi-do (KR)
(74) Representative: Gulde & Partner

(57) **Abstract**

A battery pack is provided with a tape unit and battery cells disposed on both sides of the tape unit. The battery cells include a first battery cell group disposed on a first surface of the tape unit, and a second battery cell group disposed on a second surface of the tape unit, wherein the battery cells in the first battery cell group are arranged alternately with the battery cells in the second battery cell group with respect to a direction of the tape unit. The tape unit is folded in a zigzag manner to form a battery cell stack.

## Description

### BACKGROUND

### 1. Field

One or more embodiments relate to a battery pack.

### 2. Description of the Related Art

Generally, secondary batteries are chargeable and dischargeable unlike primary batteries that cannot be recharged. Secondary batteries are used as energy sources for mobile devices, electric vehicles, hybrid vehicles, electric bicycles, and uninterruptible power supplies. Depending on the type of external devices to which they are applied, the secondary batteries may be used in the form of a single battery or a module in which batteries are connected and bundled into one unit.

Small mobile devices, such as mobile phones, may operate for a certain period of time with an output from a single battery. However, when a long-term operation or high-power operation is required, such as in the case of electric vehicles or hybrid vehicles that consume a lot of power, a module type including multiple batteries is preferred due to issues of output and capacity. An output voltage or output current may be increased with the number of built-in batteries.

### SUMMARY

One or more embodiments include a battery pack including a plurality of battery cells, which is reliable even if dropped because a swelling space between the plurality of battery cells.

However, the technical problems to be solved by the present disclosure are not limited to the above-mentioned problems, and other problems not mentioned may be clearly understood by those skilled in the art from the description herein.

Additional aspects will be set forth in part in the description which follows and, in part, will be apparent from the description, or may be learned by practice of the presented embodiments of the present disclosure.

A first aspect of the present disclosure relates to a battery pack, which includes a tape unit and battery cells disposed on surfaces of the tape unit, wherein the battery cells include a first battery cell group disposed on a first surface of the tape unit and a second battery cell group disposed on a second surface of the tape unit, wherein the battery cells of the first battery cell group are arranged alternately with the battery cells of the second battery cell group with respect to a direction of the tape unit, and wherein the tape unit is folded in a zigzag manner to form a battery cell stack.

The tape unit may include a first layer formed in a rectangular shape and a second layer comprising a plurality of adhesive parts attached to one surface of the first layer at regular intervals, wherein the plurality of battery cells are disposed at positions corresponding to the plurality of adhesive parts.

The first layer may include a 1st-1 layer forming one surface of the first layer and a 1st-2 layer that is in contact with the 1st-1 layer and forms the other surface of the first layer, wherein the second layer may be attached to the 1st-2 layer.

The 1st-2 layer may include a first surface and a second surface, an adhesive may be formed only on the first surface, and the first surface may be adhered to the 1st-1 layer.

The plurality of adhesive parts may include first adhesive parts, second adhesive parts, and a third adhesive part, wherein each of the first adhesive parts may include a first part formed to correspond to an edge of a surface of one of the battery cells and a second part formed to correspond to a central portion of a surface of the one of the battery cells, wherein openings are formed in the 1st-2 layer, and each of the second parts may be formed in a shape and at a position corresponding to one of the openings. In other words, each of the second adhesive parts may be formed in a shape corresponding to one of the openings of the 1st-2 layer and is positioned on the second layer to align with the openings of the 1st-2 layer.

The 1st-1 layer may include a first hole unit, and the 1st-2 layer may include a second hole unit, wherein the first hole unit and the second hole unit may be formed in a shape and at positions corresponding to each other. In other words, the first hole unit and second hole unit may have the same shape and may be positioned in the 1st-1 layer and 1st-2 layer to be aligned (overlap) with each other.

The second layer may include a plurality of first adhesive parts each of which includes a first part formed to correspond to an edge of a surface of one of the battery cells and a second part formed to correspond to a central portion of the surface one of the battery cells, a plurality of second adhesive part each including a double-sided tape, and a third adhesive part including a compressible member, wherein the second layer may be formed so that the plurality of the first and second adhesive parts are arranged in a row on the first layer at regular intervals in the direction of the tape unit.

The third adhesive part may be disposed only at one end of the second layer.

The first adhesive part and the second adhesive part may be arranged alternately in the direction of the tape.

The first, second, and third adhesive parts all may include an adhesive material on both sides thereof.

The second layer may include the first adhesive parts arranged in a row at regular intervals in the direction of the tape unit.

The second layer may include a plurality of second adhesive parts each including a double-sided tape; and a plurality of third adhesive parts each including a compressible member, wherein the plurality of second adhesive and the plurality of third adhesive parts are arranged alternately in the direction of the tape unit.

According to one or more embodiments, a battery pack includes a tape unit and battery cells disposed on surfaces of the tape unit, wherein the battery cells may include a first battery cell group disposed on a first surface of the tape unit and a second battery cell group disposed on a second surface of the tape unit, wherein the battery cells of the first battery cell group are arranged alternately with the battery cells of the second battery cell group with respect to a direction of the tape unit, wherein the tape unit is folded in a zigzag manner to form a battery cell stack, wherein the tape unit may include a first layer formed in a rectangular shape, a second layer comprising a plurality of adhesive parts attached to one surface of the first layer at regular intervals, wherein the plurality of adhesive parts includes first adhesive parts, second adhesive parts, and a third adhesive part, wherein each of the first adhesive parts may include a first part formed to correspond to an edge of a surface of one of the battery cells, a second part formed to correspond to a central portion of the surface of one of the battery cells, and the first part may be formed to have a gap on one side.

According to one or more embodiments, the first part of the first adhesive parts may be formed to have a gap on one side.

A second aspect of the present disclosure relates to a method of manufacturing a battery pack, the method including arranging first battery cell groups at regular intervals in a jig, fitting a first surface of the tape unit on the jig and adhering the first surface to the first battery cell group, and disposing a second battery cell group on a second surface of the tape unit, wherein the battery cells of the second battery cell group is arranged alternately with the battery cells of the first battery cell group.

The method may further include, before arranging the first battery cell group in the jig: stacking a 1st-2 layer on a 1st-1 layer to form a first layer of the tape unit (with the 1st-1 layer forming the first surface of the tape unit), and stacking a plurality of adhesive parts on the 1st-2 layer to form a second layer of the tape unit (and forming the second surface of the tape unit).

The fitting of the first surface of the tape unit in the jig may include coupling first and second hole units in the first layer of the tape unit to a protrusion in the jig.

Other aspects, features and advantages other than those described above will become apparent from the detailed description, claims and drawings.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is an exploded view of a battery cell according to embodiments;
FIG. 2 is a perspective view of the battery cell of FIG. 1 in an assembled state;
FIG. 3 is a diagram showing a process of manufacturing a tape unit and a plurality of battery cells adhered to the tape unit according to embodiments;
FIG. 4 is a diagram showing battery cells adhered to a tape unit and a folding structure of the tape unit according to embodiments;
FIG. 5 is a diagram showing a structure in which battery cells adhered to the tape unit according to embodiments are folded in a zigzag manner to form a battery cell stack;
FIG. 6 is a cross-sectional view taken along line A-A' of FIG. 5;
FIG. 7 is a diagram showing an exploded perspective view of a tape unit according to embodiments;
FIG. 8(A) is a top view of a first adhesive part according to embodiments, and FIG. 8(B) is a side view of the first adhesive part according to embodiments;
FIG. 9(A) is a top view of the second adhesive part according to embodiments, and FIG. 9(B) is a side view of the second adhesive part according embodiments;
FIG. 10(A) is a top view of a third adhesive part according to embodiments, and FIG. 10(B) is a side view of the third adhesive part according to embodiments;
FIG. 11 shows an exploded perspective view of a tape unit according to other embodiments;
FIG. 12 shows an exploded perspective view of a tape unit according to other embodiments; and
FIG. 13 is a flowchart showing a method of manufacturing a battery pack according to embodiments.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, a battery pack according to embodiments will be described in detail with reference to the accompanying drawings. The terms or words used in the specification and claims should not be construed as limited to their usual or dictionary meanings, but should be interpreted as meaning and concept consistent with the technical idea of the present disclosure based on the principle of definability that the inventor may appropriately define the concept of terms in order to explain his or her invention in the best way. Accordingly, the embodiments described in this specification and the configurations shown in the drawings are only some of the most preferred embodiments of the present disclosure and do not represent the entire technical idea of the present disclosure, thus, it should be understood that at the time of filing this application, there may be various equivalents and modifications that may replace them. Also, when used herein, "comprise, include," and/or "comprising, including" refer to specifying the presence of mentioned features, shapes, numbers, steps, operations, members, elements, and/or groups thereof, and it does not exclude the presence or addition of one or more other features, shapes, numbers, steps, operations, members, elements and/or groups. Additionally, when describing embodiments of the present disclosure, "may" and "may be" may include "one or more embodiments of the present disclosure."

Additionally, to facilitate understanding of the disclosure, the attached drawings may not be drawn to scale, but the dimensions of some components may be exaggerated. Additionally, like reference numbers may be assigned to like components in different embodiments.

The statement that two comparison objects are 'the same' means that they are 'substantially identical.' Therefore, substantially identical may include a deviation that is considered low in the art, for example, a deviation of less than 5%. Also, the term that a certain parameter is uniform in a certain region may mean uniformity from an average perspective.

Although first, second, etc. are used to describe various components, these components are of course not limited by these terms. These terms are only used to distinguish one component from another component, and unless specifically stated to the contrary, the first component may also be a second component.

Throughout the specification, unless otherwise stated, each component may be singular or plural.

The placement of any component on the "top (or bottom)" of a component means that any component is placed in contact with the top (or bottom) of the component and may mean that other components may be interposed between the component and any component disposed on (or under) the component.

Additionally, when a component is described as being "connected," "coupled," or "combined" to another component, it should be understood that the components may be directly connected or combined to each other, but another component may be "interposed" between the components or each component may be "connected", "coupled" or "combined" through other components. Additionally, when a part is said to be electrically coupled to another part, this includes not only a case when the parts are directly connected, but also a case when the parts are connected with other intervening elements.

When referring to "A and/or B" throughout the specification, this means A, B or A and B, unless specifically stated to the contrary. That is, "and/or" includes all or any combination of the plurality of listed items. When referring to "C to D" this means C or higher and D or lower, unless specifically stated to the contrary.

The terms used in this specification are for describing embodiments of the present disclosure and are not intended to limit the disclosure.

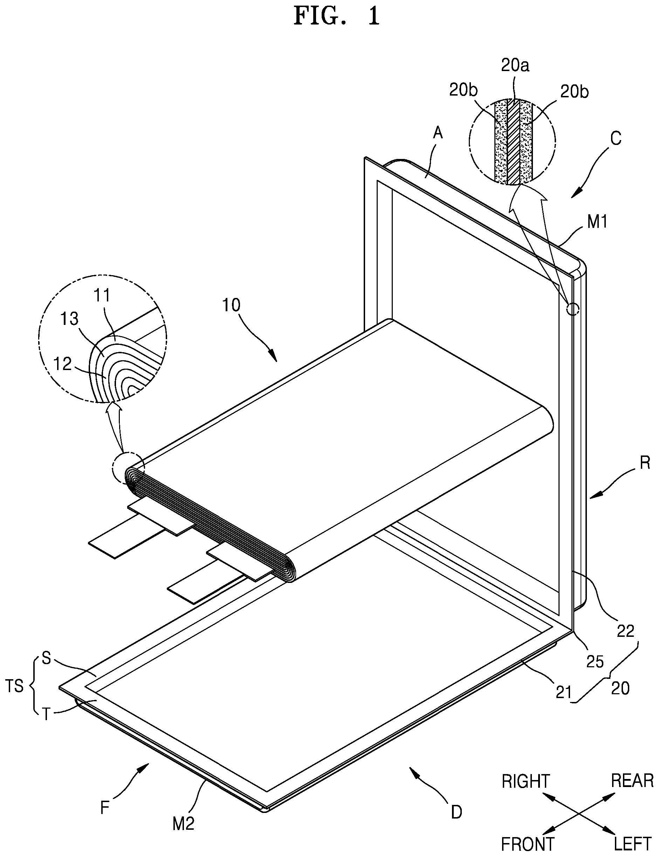

Hereinafter, a battery cell according to embodiments will be described with reference to FIGS. 1 to 10(B).

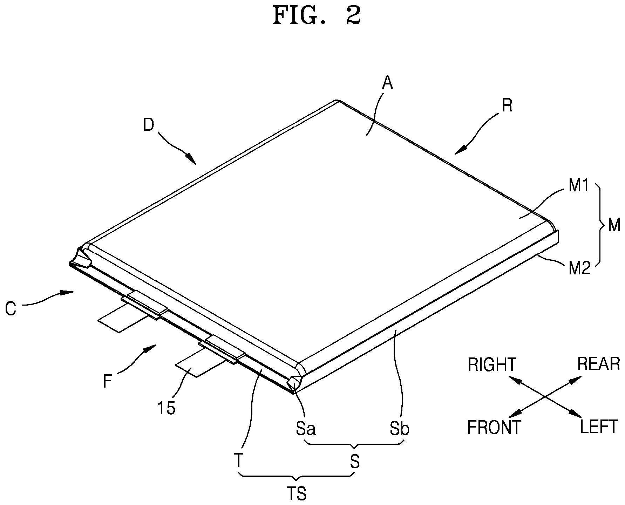

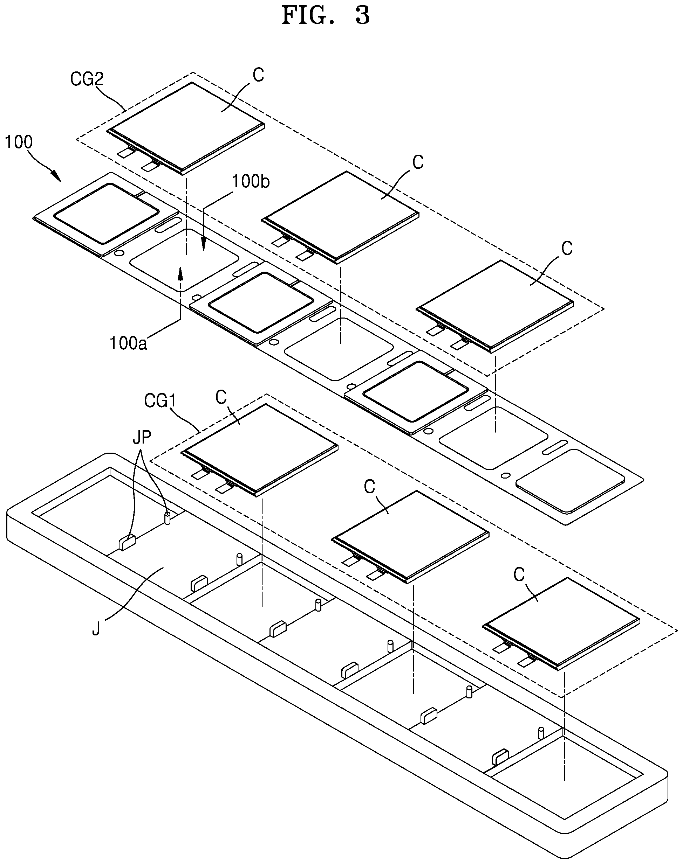

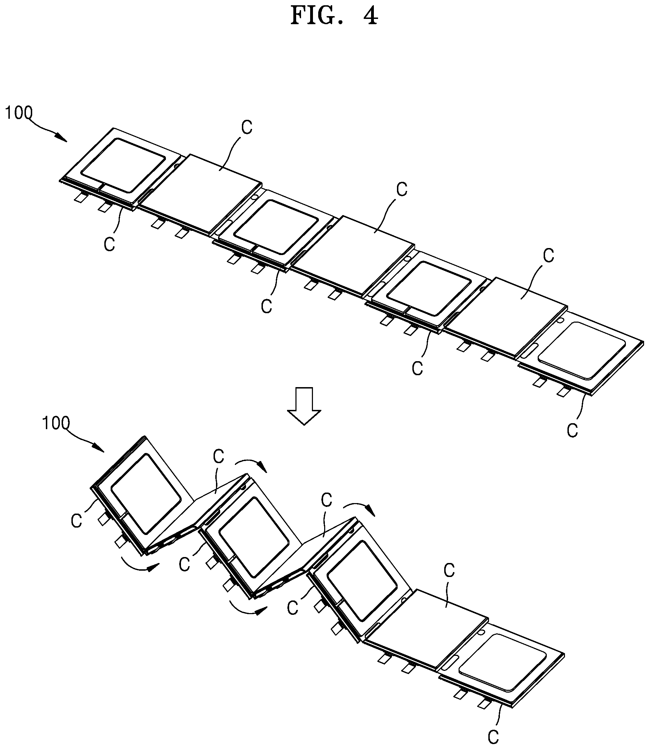

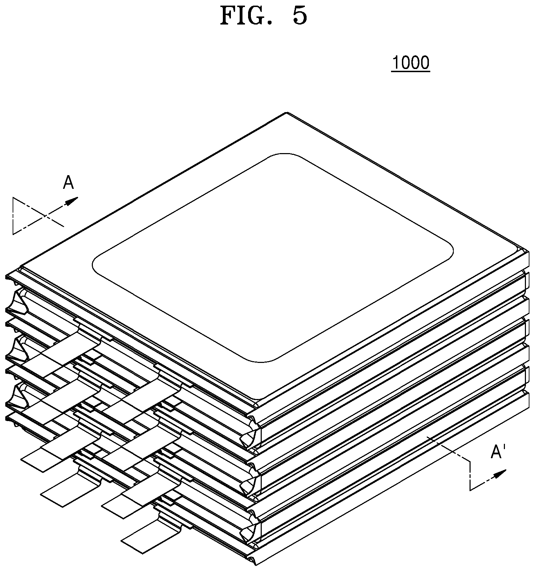

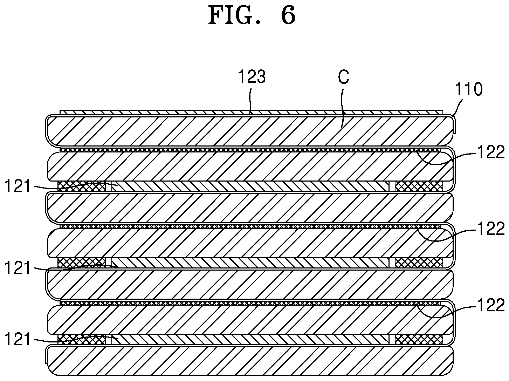

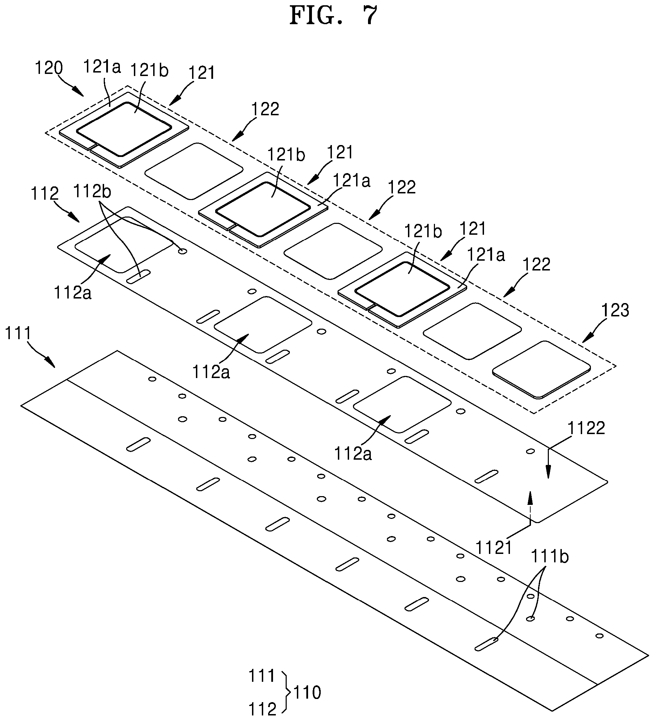

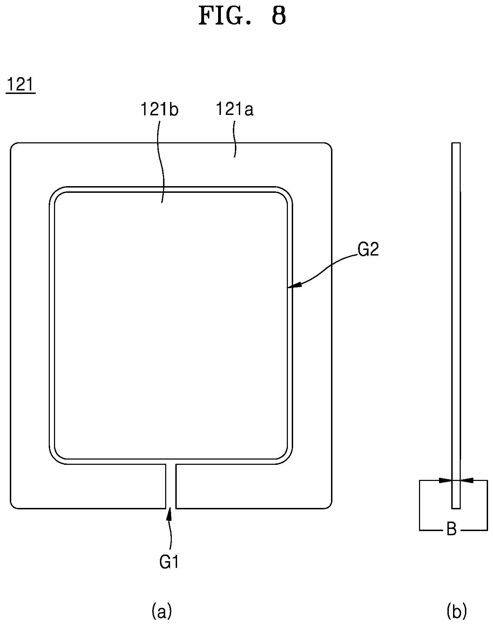

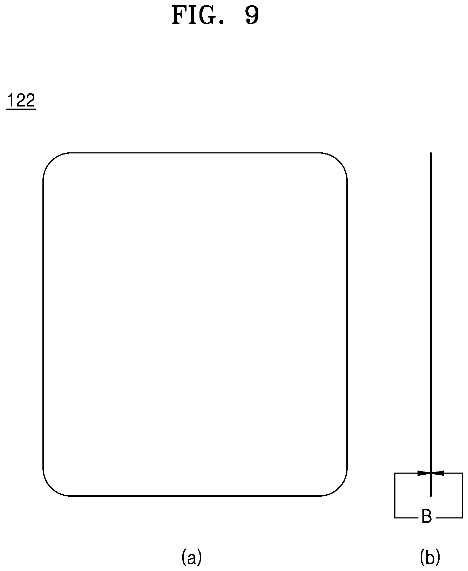

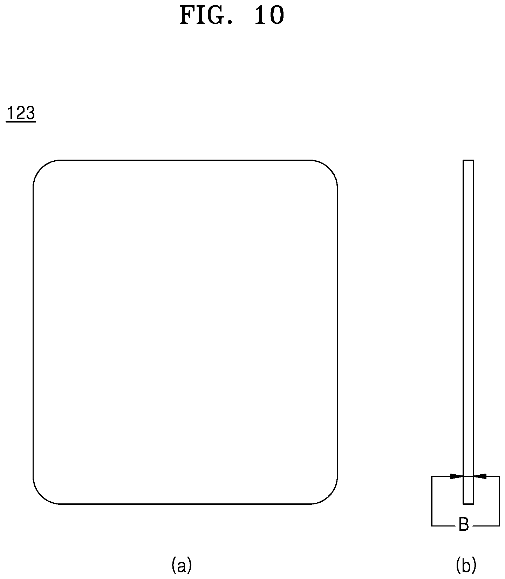

FIG. 1 shows an exploded view of a battery cell C according to embodiments, FIG. 2 is a perspective view of the battery cell C of FIG. 1 in an assembled state, FIG. 3 shows a manufacturing process of a tape unit and a plurality of battery cells adhered to the tape unit according to embodiments, FIG. 4 shows a folding structure of the battery cell and the tape unit adhered to the tape unit according to embodiments, FIG. 5 shows a structure in which battery cells adhered to the tape unit according to embodiments are folded in a zigzag manner to form a battery cell stack, FIG. 6 is a cross-sectional view taken along line A-A' of FIG. 5, FIG. 7 shows an exploded perspective view of the tape unit according to embodiments, FIG. 8(A) is a top view of a first adhesive part according to embodiments and FIG. 8(B) is a side view of the first adhesive part according to embodiments, FIG. 9(A) is a top view of the second adhesive part according to embodiments and FIG. 9(B) is a side view of the second adhesive part according to embodiments, and FIG. 10(A) is a top view of a third adhesive part according to embodiments and FIG. 10(B) is a side view of the third adhesive part according to embodiments.

Referring to FIGS. 1 and 2, the battery cell C includes an electrode assembly 10, an accommodation portion A in which the electrode assembly 10 is accommodated, and a sealing portion TS extending along an edge of the accommodation portion A to seal the accommodation portion A. The electrode assembly 10 may be formed in a roll shape by winding first and second electrode plates 11 and 12 arranged to face each other with a separator 13 therebetween or may be formed in a stack form by stacking a plurality of the first and second electrode plates 11 and 12 with a separator 13 therebetween. An electrode tab 15 forming a charge and discharge path may be connected to the electrode assembly 10. The electrode tab 15 may include two electrode tabs 15 of different polarities electrically connected to the electrode assembly 10, and the electrode tab 15 connected to the electrode assembly 10 within the accommodation portion A may be drawn out to outside of the accommodation portion through a front surface F of the accommodation portion A.

The accommodation portion A in which the electrode assembly 10 is accommodated may be formed in a substantially rectangular parallelepiped shape. More specifically, the accommodation portion A may include the front surface F from which the electrode tab 15 protrudes, a rear surface R opposite to the front surface F, a pair of main surfaces M that connect the front surface F and the rear surface R and have a relatively large area, and a pair of side surfaces D that connect the front surface F and the rear surface R and have a relatively small surface area. The main surfaces M may have the largest surface area among the surfaces of the accommodation portion A and may be formed with a larger area than the front surface F, the rear surface R, and the side surfaces D. The front surface F, the rear surface R, and the pair of side surfaces D may be connected to the main surfaces M at different corners along the main surface M of the accommodation portion A.

In embodiments of the present disclosure, the main surface M and the side surface D may be formed in pairs at positions facing each other. For example, the main surface M may include first and second main surfaces M1 and M2 facing each other. Among the surfaces connecting the front surface F and the rear surface R, a surface having a relatively large surface area may correspond to the main surface M or the side surface M with a large surface area, and among the surfaces connecting the front surface F and the rear surface R, a surface having a relatively small surface area may correspond to the side surface M or the side surface D with a small surface area, Throughout this specification, the side surface D may denote a side surface D with a small surface area and, in particular, unless mentioned as a large surface area side surface M, may refer to a small surface area side surface D, and the large surface area side surface M may refer to the main surface M.

The battery cell C may further include the sealing portion TS formed along the edge of the accommodation portion A to seal the accommodation portion A. The accommodation portion A for accommodating the electrode assembly 10 and the sealing portion TS for sealing the accommodation portion A may be formed from an exterior material 20 continuously formed to surround the electrode assembly 10. That is, the exterior material 20 may surround the electrode assembly 10 and form the accommodation portion A that accommodates the electrode assembly 10, and the extra exterior material 20 remaining after forming the accommodation portion A may form the sealing portion TS that seals the accommodation portion A.

The exterior material 20 may include a flexible exterior material 20 such as a layered structure, and more specifically, a metal layer 20a, such as an aluminum sheet and an insulating layer 20b, such as a resin coating layer formed on both surfaces of the metal layer 20a. At this time, the metal layer 20a may be exposed to the outside through a cross-section where the exterior material 20 ends. As described below, the metal layer 20a may be exposed through at edge of the sealing portion TS where first and second exterior materials 21 and 22 are coupled to face each other with the electrode assembly 10 therebetween. But not at the edge representing a folding portion 25 connecting the first and second exterior materials 21 and 22.

In embodiments of the present disclosure, the exterior material 20 may include the first and second exterior materials 21 and 22 that are coupled to face each other with the electrode assembly 10 therebetween. The electrode assembly 10 may be positioned between the first and second exterior materials 21 and 22, the first and second exterior materials 21 and 22 may be folded to overlap each other through a folding portion 25 connecting the first and second exterior materials 21 and 22. Parts that contact each other may be joined to each other along edge regions of the first and second exterior materials 21 and 22 by heat fusion or the like. Thus, an inner region of the first and second exterior materials 21 and 22 facing each other with the electrode assembly 10 therebetween may be formed as the accommodation portion A, and the edge region of the first and second exterior materials 21 and 22 joined to each other may be formed as a sealing portion TS.

The sealing portion TS may be formed continuously along the edge regions of the first and second exterior materials 21 and 22 except for the folding portion 25. More specifically, the sealing portion TS may include a terrace portion T extending in a front surface F direction of the accommodation portion A and a side sealing portion S extending in a side surface D direction of the accommodation portion A. The electrode tab 15 connected to the electrode assembly 10 within the accommodation portion A may be pulled out to outside of the accommodation portion A through the terrace portion T extending in the front surface F direction of the accommodation portion A. In addition, a protection circuit module may be seated on the terrace portion T, and the electrode tab 15 that is pulled out through the terrace portion T may be bent to be connected to the protection circuit module seated on the terrace portion T.

The side sealing portion S may include a main body Sb at a position corresponding to the accommodation portion A and a front-end portion Sa extending from the main body Sb to a position outside of the accommodation portion A. The side sealing portion S may be folded toward the accommodation portion A to reduce an area occupied by the entire battery cell C, and the side sealing portion S may be folded toward the accommodation portion A through a first folding and a second folding. That is, in the first folding, the main body Sb of the side sealing portion S at a position corresponding to the accommodation portion A and the front-end portion Sa of the side sealing portion S at a position outside of the accommodation portion A are folded up together. After the first folding, a second folding may be performed where the front-end portion Sa is folded to be concavely recessed toward edges where the front surface F of the accommodation portion A and the terrace portion T come into contact with each other. Through the first and second folding, the main body Sb of the side sealing portion S is folded up toward the side surface D of the accommodation portion A and may be placed on the side surface D. In the side sealing portion S, the front-end portion Sa may form a dog ear shape that is concavely recessed toward the edge formed by the front surface F of the accommodation portion A and the terrace portion T.

At the edge of the side sealing portion S, the metal layer 20a may be exposed through the cross-section where the exterior material 20 forming the side sealing portion S ends. Because the main body Sb of the side sealing portion S is folded onto the side surface D of the accommodation portion A, the metal layer 20a exposed through the edge of the main body Sb may not protrude from the side surface D of the accommodation portion A. The front-end portion Sa of the side sealing portion S is folded to be concavely recessed toward the edge formed by the front surface F of the accommodation portion A and the terrace portion T. Thus, the metal layer 20a exposed through the edge of the front-end portion Sa of the side sealing portion S may not protrude from the front surface F of the accommodation portion A. That is, the side sealing portion S may not protrude from the side surface D of the accommodation portion A and the front surface F of the accommodation portion A and may be folded in a shape that follows an outer shape of the accommodation portion A while the main body Sb of the side sealing portion S is folded onto the side surface D of the accommodation portion A and the front-end portion Sa of the side sealing portion S is folded toward the edge where the terrace portion T and the front surface F of the accommodation portion A contact each other.

In embodiments of the present disclosure, an outer shape of the battery cell C may generally follow the outer shape of the accommodation portion A, and the outer surface of the accommodation portion A, i.e., the front surface F, the rear surface R, the main surface M, and the side surface D of the accommodation portion A may substantially denote the outer surface of the battery cell C, The battery cell C may further include the sealing portion TS that seals the accommodation portion with the electrode assembly 10 is accommodated therein. The sealing portion TS, that is, at least the side seal portion S, may be folded toward the side surface D and the front surface F of the accommodation portion A in order to minimize an area occupied by the battery cell C. Thus, the external shape of the battery cell C may generally follow that of the accommodation portion A, and accordingly, the front surface F, the rear surface R, the main surface M and the side surface D of the accommodation portion A may substantially denote the front, back, main surface, and side surface of the battery cell C. The terrace portion T may be formed at a front position of the battery cell C, and the terrace portion T may be in the form of a plate rather than a surface shape so that the protection circuit module is seated thereon. If the external shape of the battery cell C is viewed as approximately a rectangular parallelepiped shape, the front of the battery cell C may denote the front surface F of the accommodation portion A.

Referring to FIGS. 3 to 10, the battery pack according to embodiments may include a tape unit 100 and a plurality of battery cells C disposed on both (opposing) surfaces of the tape unit 100. The plurality of battery cells C may include a first battery cell group CG1 disposed on a first surface 100a of the tape unit 100 and a second battery cell group CG2 disposed on a second surface 100b of the tape unit 100. The battery cells C of the first battery cell group CG1 may be arranged alternately with the battery cells C of the second battery cell group CG2 with the tape unit 100 as the center(e.g., in a direction in which the tape unit 100 extends). The tape unit 100 on which the first and second battery cell groups CG1 and CG2 are arranged may be folded in a zigzag manner to form a battery cell stack 1000.

The tape unit 100 may include a first layer 110 integrally formed in a rectangular shape and a second layer 120 in which a plurality of adhesive parts 121, 122, and 123 are attached to one surface of the first layer 110 at regular intervals, wherein a plurality of battery cells C may be disposed at positions corresponding to the plurality of first, second, and third adhesive parts 121, 122, and 123, respectively.

Typically, a tape for joining the battery cells C is disposed between a plurality of stacked battery cells. Because a plurality of tapes needs to be individually attached between the plurality of battery cells, the speed of production of the battery pack may be reduced. Specifically, it is required to manage multiple tape materials separately, a jig is required each time an individual tape is attached between battery cells, and after one surface of the unit tape is attached to one surface of one battery cell, before attaching other battery cells to the other surface of the unit tape, the battery cell to which the unit tape is attached needs to be stored individually. Thus, in the prior art the speed of production of the battery pack may be reduced.

Accordingly, in embodiments of this disclosure, an integrated tape unit 100 may be provided by attaching a plurality of adhesive parts 121, 122, and 123 of different shapes and different materials to the first layer 110, which is an integrally formed single, rectangular tape.

The plurality of adhesive parts 121, 122, and 123 of different shapes and different materials may be easily attached to a plurality of battery cells C at one time using a jig J. Compared to a case where the tape is attached to each individual product, the speed of production of the battery pack may be improved by attaching at one time a plurality of adhesive parts to a plurality of battery cells using first, second, and third adhesive parts 121, 122, and 123 attached to the integrated tape.

According to embodiments, the first layer 110 may include a 1st-1 layer 111 forming one surface of the first layer 110 and a 1st-2 layer 112 that is in contact with the 1st-1 layer 111 and forms the other surface of the first layer 110. The second layer 120 is attached to the 1st-2 layer 112.

The 1st-1 layer 111 may be a release paper. At this time, the 1st-1 layer 111 may include a polyethylene terephthalate (PET) material. For example, the first layer 110 may include an anti-bubble material to prevent bubbles from generating between the 1st-2 layer 112 and the 1st-1 layer 111, and thus, compactness of the battery pack may be maintained.

The 1st-2 layer 112 may include a PET material, and the 1st-1 layer 111 may be attached thereto. The 1st-2 layer 112 may form a main skeleton unit that is integrally formed in a rectangular shape so that the tape unit 100 has a longitudinal direction. The 1st-2 layer 112 may include a PET material.

The 1st-2 layer 112 may include a first surface 1121 and a second surface 1122. According to embodiments, the adhesive material is formed only to the first surface 1121 of the 1st-2 layer 112, and the first surface 1121 may be adhered to the 1st-1 layer 111. The first, second, and third adhesive parts 121, 122, and 123 (which will be described later) may be attached to the second surface 1122.

In a manufacturing process, the 1st-1 layer 111 and the 1st-2 layer 112 are combined first to form the first layer 110, and the first, second, and third adhesive parts 121, 122, and 123 may be adhered to the second surface 1122 of the 1st-2 layer 112 of the first layer 110. As shown in the drawings, because an area of the second surface 1122 is greater than an area of the first, second, and third adhesive parts 121, 122, and 123, the adhesive material is not applied to all parts of the second surface 1122. Accordingly, the first, second, and third adhesive parts 121, 122, and 123 may be attached to the second surface 1122, which does not include an adhesive component, by using the adhesive material formed on surfaces of the first, second, and third adhesive parts 121, 122, and 123.

According to embodiments, the second layer 120 may include the first, second, and third adhesive parts 121, 122, and 123. The first adhesive part 121 may include a first part 121a formed to correspond to an edge of a surface of the battery cell C and a second part 121b formed to correspond to a central portion of a surface of the battery cell C. The first part 121a may be formed to be harder than the second part 121b. That is, the first part 121a may include a hard material, and the second part 121b may include a soft material. In other words, the first part 121a may include a material, which is harder than the material of the second part 121b. For example, the first part 121a may include hard rubber. The first part 121a including hard rubber may absorb shock if the battery pack is dropped. The second part 121b may include a compressible material. For example, the second part 121b may include sponge. If swelling of one or more the battery cells C occurs, the swelling may be effectively absorbed by the second part 121b including a sponge material. Thus, the first adhesive part 121 may include different materials for the first part 121a and the second part 121b.The first adhesive part 121 including the first part 121a and the second part 121b including different materials is disposed on the second layer 120 to form one single layer. With such a configuration, if the battery pack including the battery cell stack 1000 is dropped, the shock resulting from the fall is absorbed through the first part 121a including a hard material, and if swelling of one or more of the battery cells C occurs, particularly the central portion of the surface of a battery cell C swells, the second part 121b disposed at a position corresponding to the swelling portion absorbs the swelling of the battery cell C.

In addition, the first part 121a for ensuring durability and the second part 121b for absorbing swelling form only one layer between the battery cells C. Thus, an increase in volume of the battery pack may be prevented, and, accordingly, a compact battery pack structure may be manufactured.

A first opening 112a may be formed in the 1st-2 layer 112, and the second part 121b may be formed in a corresponding shape at a position corresponding to the first opening 112a. That is, the second part 121b of the second layer 120 may directly contact the 1st-1 layer 111, which is a release paper, through the first opening 112a formed in the 1st-2 layer 112. Therefore, the second part 121b, which includes a compressible material like a sponge, may secure an additional compressible space through the first opening 112a, and may absorb swelling to a greater extent when swelling of the battery cells C occurs.

According to embodiments, the first part 121a may be formed to surround the second part 121b. The first part 121a may be disposed between the battery cells C at a position corresponding to the edge of the battery cells C. that is, the first part 121 a may be formed at the edge position of the battery cell C that may absorb the impact that the battery cells C receive when the battery pack is dropped on any part thereof. In addition, the second part 121b is disposed in the center of the surface of the battery cell C, where swelling easily occurs, and may effectively absorb swelling of the battery cell C.

According to the present embodiments, the first part 121a and the second part 121b may be arranged to be spaced apart from each other by a (second) gap G2. As the first part 121a is pressed by pressure between the battery cells C, the first part 121a may spread in a direction perpendicular to the pressing direction. Likewise, the second part 121b may receive the swelling pressure of the battery cell C and spread in a direction perpendicular to the direction of the swelling pressure. If the first part 121a and the second part 121b spread in a direction perpendicular to the direction of received pressure, interference may occur between the first part 121a and the second part 121b. Thus, the shock absorption of the battery pack and the swelling absorption of the battery cells C may not be performed properly. Accordingly, the second gap G2 is formed between the first part 121a and the second part 121b to prevent interference between the two components when the first part 121a and the second part 121b spread in a direction perpendicular to the direction of pressure received from the battery cell C. The second gap G2 may be formed, for example, to be 1 mm or more. If the second gap G2 is less than 1 mm, the gap between the first part 121a and the second part 121b may be filled and mutual interference may occur.

According to embodiments, the first part 121a may be formed to have a (first) gap G1 including a cutout portion 130 cut on one side. The second portion 121b may spread in a direction perpendicular to the direction of swelling pressure from the battery cell C. As the second part 121b spreads, the first part 121a may receive pressure from the second part 121b in a direction perpendicular to the direction of pressure from the battery cell C. If the first part 121a is formed in a ring shape, and if pressure is applied from the center of the ring shape to the ring shape, the ring shape may not be able to withstand the pressure and the ring shape may be damaged. Accordingly, as the first gap G1 is formed by cutting one side of the first part 121a (which has a ring shape), when the swelling pressure received by the second part 121b from the battery cell C is transmitted to the first part 121a, the first part 121a may not be damaged That is, the first gap G1 increases as pressure transmitted from the second part 121b is absorbed by the first part 121a, and only a slight deformation occurs in the first part 121a to the extent that the first gap G1 is widened. In addition, as the second part 121b is pressed from the swelling of the battery cell C, the second part 121b is pushed into a space of the first gap G1, and the shape of the first adhesive part 121 may be functionally maintained.

According to embodiments, the 1st-1 layer 111 may include a first hole unit 111b and the 1st-2 layer 112 may include a second hole unit 112b, wherein the first hole unit 111b and the second hole unit 112b may be formed in corresponding positions and in shapes corresponding to each other.

A jig protrusion JP of the jig J may be formed in a shape corresponding to the first hole unit 111b and the second hole unit 112b. And the first hole unit 111b of the 1st-1 layer 111 and the second hole unit 112b of the 1st-2 layer 112 may be coupled by fitting into the jig protrusions JP of the jig J. In this way, the 1st-1 layer 111 and the 1st-2 layer 112 constituting the first layer 110 may be fixed to a set position of the jig J. In a state that the 1st-1 layer 111 and the 1st-2 layer 112 are fixed at the set position, the second layer 120 and the battery cell C may be attached to the set position of the first layer 110. Thus, the battery cell C, the first layer 110, and the second layer 120 may be precisely attached to each other at the set positions.

According to embodiments, the second layer 120 may include the first adhesive part 121 including the first part 121a formed to correspond to an edge of a surface of the battery cell C and a second part 121b formed to correspond to a central portion of a surface of the battery cell C. The second layer 120 may also include a second adhesive part 122 including a double-sided tape, and a third adhesive part 123 including a compressible member. The second layer 120 may be formed in a structure in which the plurality of adhesive parts 121, 122, and 123 are arranged in a row on the first layer 110 at regular intervals. Both surfaces of the first, second, and third adhesive parts 121, 122, and 123 may include an adhesive B.

Referring to FIG. 7, the third adhesive part 123 may be disposed at only one end of the ends of the second layer 120. The surfaces on both sides of the third adhesive part 123 may include an adhesive material. The third adhesive part 123 may include a compressible member capable of absorbing swelling but not include a hard member (such as the first part 121a of the first adhesive part 121). Therefore, if the tape unit 100 on which the first and second battery cell groups CG1 and CG2 are disposed is folded in a zigzag shape to form the battery cell stack 1000, with the third adhesive part 123 may be positioned at only one of the ends of the second layer 120, a battery cell C may be located only on one side of the third adhesive part 123.

Referring to FIG. 7, the first adhesive part 121 and the second adhesive part 122 may be alternately arranged. In such a case, when the tape unit 100 is folded in the zigzag manner of FIG. 4 to form the battery cell stack 1000 of FIG. 5, the result is a structure in which one surface of one battery cell C is in contact with the first adhesive part 121 and the other surface of the battery cell C is in contact with the second adhesive portion 122. Here, the second adhesive part 122 may be a double-sided tape structure that has a less thickness (see FIGS. 8(b), 9(b), and 10(b)) compared to the thicknesses of the structures of the first adhesive part 121 and the third adhesive part 123.

In the described embodiment, shock is absorbed by the tape unit 100 when a battery pack is dropped and also swelling of a battery cell C is absorbed by the tape unit 100. Further, the battery pack may be compact by having a reduced overall volume because of the tape structure, in particular because the second adhesive portion 122 has a small thickness.

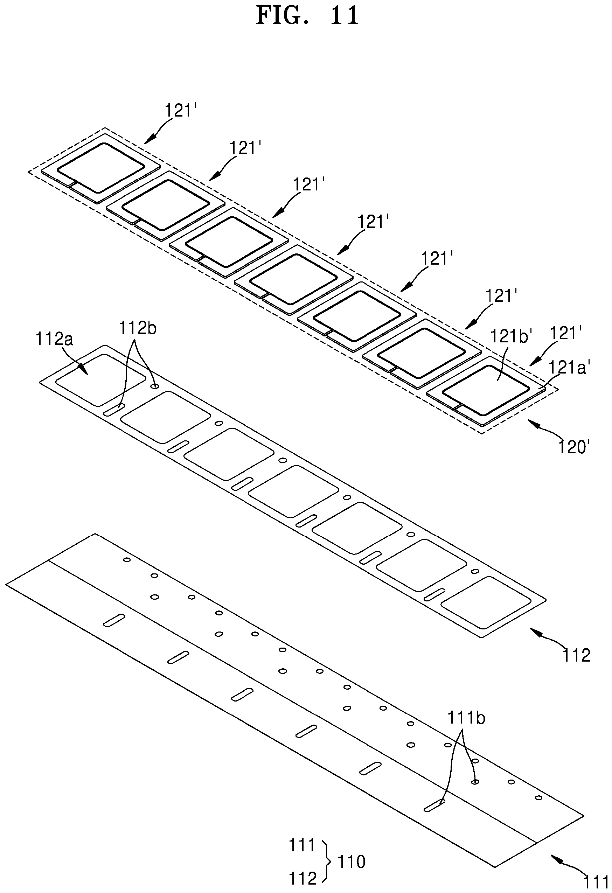

FIG. 11 shows an exploded perspective view of a tape unit according to other embodiments

Referring to FIG. 11, a second layer 120' may include first adhesive parts 121' arranged in a row at regular intervals. That is, in these embodiments, the second layer 120' only includes the first adhesive parts 121' and not a second adhesive part and a third adhesive part. In this way, when forming a battery cell stack through a zigzag folding, the first adhesive part 121' is interposed on both sides of the battery cells C. Thus, there may be improved absorption of swelling from the battery cell C by the second part 121b', and absorption of an impact if the battery pack is dropped may be further improved because of the first portion 121a'.

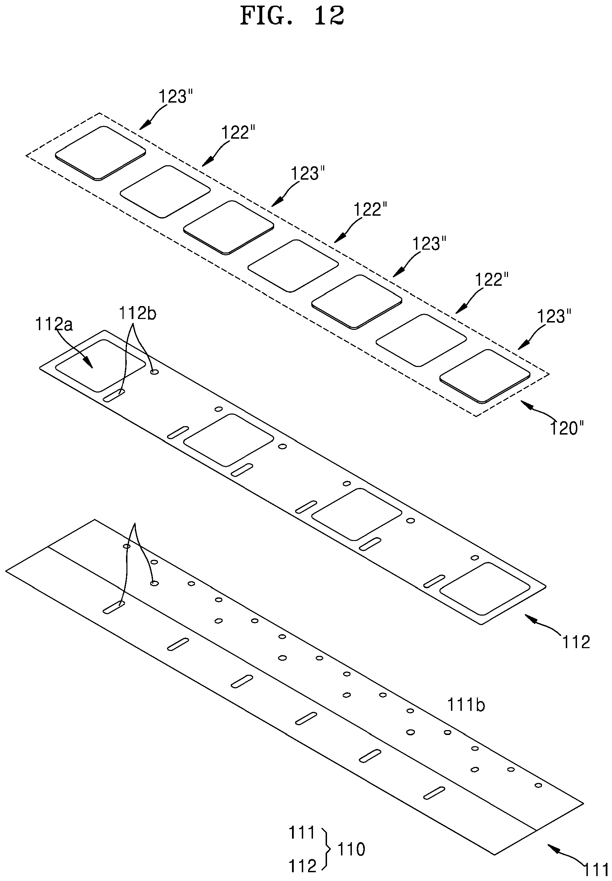

FIG. 12 shows an exploded perspective view of a tape unit according to other embodiments.

Referring to FIG. 12, a second layer 120" may include second adhesive parts 122" and third adhesive parts 123" arranged alternately. That is, in these embodiments, the second layer 120" is configured with only the second adhesive part 122" and the third adhesive part 123" and not the first adhesive part. In this way, when stacking the battery cells C through a zigzag folding, the second adhesive parts 122" and third adhesive parts 123" are alternately disposed on both sides of the battery cells C, and a first part 121a of the first adhesive part including a hard material (as described above) is not interposed between the battery cells C. Thus, the volume of the battery pack may be reduced such that the battery pack is more compact, and, at the same time, the third adhesive part 123" may absorb swelling that occurs between battery cells C.

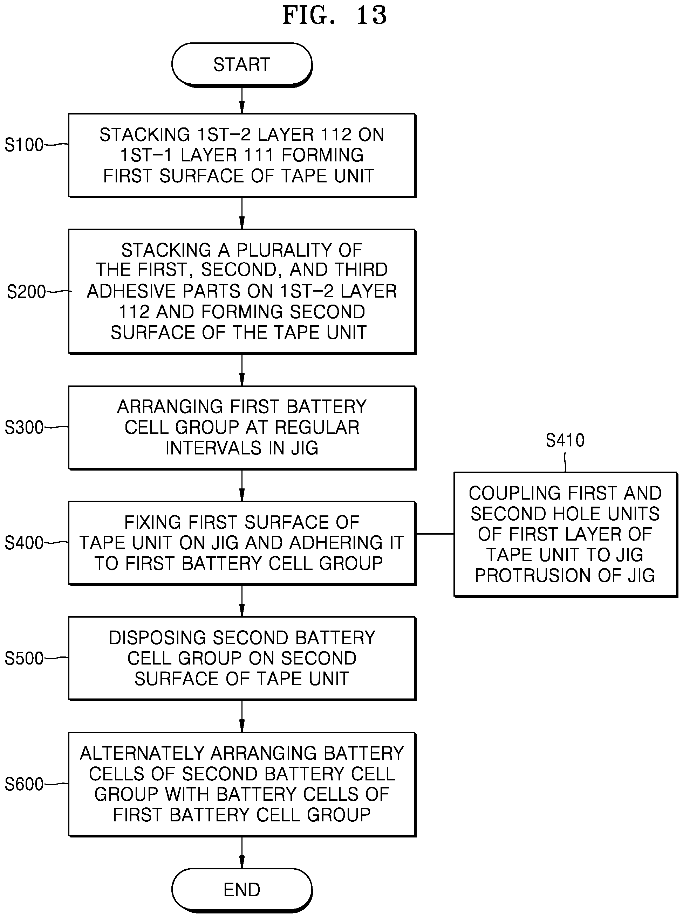

With reference to FIG. 13, a method of manufacturing a battery pack according to embodiments will be described. FIG. 13 is a flowchart showing a method of manufacturing a battery pack according to embodiments. The method of manufacturing a battery pack according to embodiments may include stacking a 1st-2 layer 112 on a 1st-1 layer 111 forming a first surface 100a of a tape unit 100 (S100), stacking a plurality of the first, second, and third adhesive parts 121, 122, and 123 on the 1st-2 layer 112 and the adhesive parts forming a second surface 100b of the tape unit 100 (S200), arranging a first battery cell group CG1 at regular intervals in a jig J (S300), fixing a first surface 100a of the tape unit 100 on the jig J and adhering it to the first battery cell group CG1 (S400), disposing a second battery cell group CG2 on the second surface 100b of the tape unit 100 (S500), and folding the tape unit 100 such that battery cells of second battery cell group CG2 at alternatively arranged with battery cells of the first battery cell group CG1 (S600).

The fixing the first surface 100a of the tape unit 100 on the jig J and adhering it to the first battery cell group CG1 (S400) may include coupling first and second hole units 111b and 112b of the first layer 110 of the tape unit 100 to a jig protrusion JP of the jig J.

In this way, a plurality of adhesive parts may be attached to a plurality of battery cells C at one time through the plurality adhesive parts 121, 122, and 123 attached to the first layer 110, which is an integrated tape. After a plurality of battery cells are attached to the integrated tape, a battery cell stack may be formed simply by folding the integrated tape in a zigzag manner, thereby improving the production speed of the battery pack.

The effects that may be achieved through the present disclosure are not limited to the above-described effects, and other technical effects not mentioned will be clearly understood by those skilled in the art from the descriptions herein.

While the present disclosure has been described above with limited examples and drawings, the present disclosure is not limited thereto. Various modifications and changes may be made by those skilled in the art to which the present disclosure pertains, within the scope of equivalency of the present disclosure and the scope of the claims described below.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope of the present disclosure.

## Claims

1. A battery pack comprising:
a tape unit (100); and
a battery cells (C) disposed on surfaces of the tape unit (100),
wherein the battery cells (C) include:
a first battery cell group (CG1) disposed on a first surface (100a) of the tape unit (100); and
a second battery cell group (CG2) disposed on a second surface (100b) of the tape unit (100),
wherein the battery cells in the first battery cell group (CG1) are arranged alternately with the battery cells in the second battery cell group (CG2) with respect a direction of the tape unit (100), and
wherein the tape unit (100) is folded in a zigzag manner to form a battery cell stack (1000).

2. The battery pack as recited in claim 1, wherein the tape unit (100) includes:
a first layer (110) formed in a rectangular shape; and
a second layer (120, 120', 120") comprising a plurality of adhesive parts attached to one surface of the first layer (110) at regular intervals,
wherein the plurality of battery cells are disposed at positions corresponding to the plurality of adhesive parts.

3. The battery pack as recited in claim 2, wherein the first layer (110) includes a 1st-1 layer (111) forming one surface of the first layer (110), and a 1st-2 layer (112) that is in contact with the 1st-1 layer (111) and forms another surface of the first layer (110), and
wherein the second layer (120) is attached to the 1st-2 layer (112).

4. The battery pack as recited in claim 3, wherein the 1st-2 layer (112) includes a first surface (1121) and a second surface (1122),
wherein an adhesive is only on the first surface (1121), and
wherein the first surface (1121) is adhered to the 1st-1 layer (111).

5. The battery pack as recited in one of claims 3 or 4, wherein the plurality of adhesive parts includes first adhesive parts (121), second adhesive parts (122), and a third adhesive part (123),
wherein each of the first adhesive parts (121) includes:
a first part (121a) formed to correspond to an edge of a surface of one of the battery cells; and
a second part (121b) formed to correspond to a central portion of the surface of the one of the battery cells,
wherein openings (112a) are formed in the 1st-2 layer (112), and
wherein the each of the second parts (122) is formed in a shape and a position corresponding to one of the openings (112a).

6. The battery pack as recited in claim 3 to 5, wherein the 1st-1 layer (111) includes a first hole unit (111b), and
the 1st-2 layer (112) includes a second hole unit (112b),
wherein the first hole unit (111b) and the second hole unit (112b) are formed in shapes and at positions corresponding to each other.

7. The battery pack as recited in claim 2, wherein the second layer (120) includes:
a plurality of first adhesive parts (121) each of which includes a first part (121a) that corresponds to an edge of a surface of one of the battery cells and a second part (121b) that corresponds to a central portion of the surface of the one of the battery cells;
a plurality of second adhesive parts (122) each including a double-sided tape; and
a third adhesive part (123) including a compressible member,
wherein the second layer (120) is formed so that the first and second adhesive parts are arranged in a row on the first layer (110) at regular intervals in the direction of the tape unit (100).

8. The battery pack as recited in claim 7, wherein the third adhesive part (123) is disposed only at one end of the second layer (120).

9. The battery pack as recited in one of claims 7 or 8, wherein the plurality of first adhesive parts (121) and the plurality of second adhesive parts (122) are arranged alternately in the direction of the tape unit (100).

10. The battery pack as recited in one of claims 7 to 9, wherein the first, second, and third adhesive parts (121, 122, 123) each include an adhesive material on both sides thereof.

11. The battery pack as recited in claim 2, wherein the second layer (120') includes a plurality of first adhesive parts (121') each of which includes a first part (121a') that corresponds to an edge of a surface of one of the battery cells and a second part (121b') that corresponds to a central portion of the surface of the one of the battery cells, and the plurality of the first adhesive parts (121') are arranged in a row at regular intervals in the direction of the tape unit (100).

12. The battery pack as recited in claim 2,
wherein the second layer (120") includes:
a plurality of second adhesive parts (122') each including a double-sided tape; and
a plurality of third adhesive parts (123") each including a compressible member,
wherein the plurality of second adhesive parts (122") and the plurality of third adhesive parts (123") are arranged alternately in the direction of the tape unit (100).

13. The battery pack as recited in at least one of claims 5, 7 to 11,
wherein the first part (121a, 121a') of the first adhesive part (121, 121') is formed to have a gap (G1) on one side.

14. A method of manufacturing a battery pack, the method comprising:
arranging a first battery cell group (CG1) at regular intervals in a jig;
fitting a first surface (100a) of a tape unit (100) on the jig and adhering the first surface (100a) to the first battery cell group; and
disposing a second battery cell group (CG2) on a second surface (100b) of the tape unit (100),
wherein the battery cells of the second battery cell group (CG2) is arranged alternately with the battery cells of the first battery cell group (CG1).

15. The method as recited in claim 14, further comprising:
before arranging the first battery cell group in the jig:
stacking a 1st-2 layer (112) on a 1st-1 layer (111) to form a first layer (110) of the tape unit (100) with the 1st-1 layer (111) forming the first surface (100a) of the tape unit (100), and
stacking a plurality of adhesive parts on the 1st-2 layer (112) to form a second layer (120) and forming the second surface (100b) of the tape unit (100); and/or
the fitting of the first surface (100a) of the tape unit (100) in the jig includes coupling first and second hole units (112b) in the first layer (110) of the tape unit (100) to a protrusion in the jig.
